(19) Europäisches Patentamt / European Patent Office / Office européen des brevets

(11) **EP 1 393 395 B1**

(12) **EUROPÄISCHE PATENTSCHRIFT**

(45) Veröffentlichungstag und Bekanntmachung des Hinweises auf die Patenterteilung:
**16.06.2010 Patentblatt 2010/24**

(21) Anmeldenummer: **02718109.8**

(22) Anmeldetag: **08.02.2002**

(51) Int Cl.:
**H01M 8/04** *(2006.01)*    **H01M 8/06** *(2006.01)*

(86) Internationale Anmeldenummer:
**PCT/EP2002/001316**

(87) Internationale Veröffentlichungsnummer:
**WO 2002/065570 (22.08.2002 Gazette 2002/34)**

(54) **VERFAHREN ZUR BEREITSTELLUNG VON STANDBYGAS FÜR EINE BRENNSTOFFZELLENANORDUNG**

METHOD FOR PREPARING STANDBY GAS FOR A FUEL CELL ARRANGEMENT

PROCEDE POUR METTRE DU GAZ DE RESERVE A DISPOSITION D'UN ENSEMBLE PILE A COMBUSTIBLE

(84) Benannte Vertragsstaaten:
**AT BE CH CY DE DK ES FI FR GB GR IE IT LI LU MC NL PT SE TR**

(30) Priorität: **10.02.2001 DE 10106220**

(43) Veröffentlichungstag der Anmeldung:
**03.03.2004 Patentblatt 2004/10**

(73) Patentinhaber: **MTU Onsite Energy GmbH**
**85521 Ottobrunn (DE)**

(72) Erfinder:
• **ROLF, Stefan**
**81739 München (DE)**

• **PETERHANS, Stefan, Ibrahim**
**83646 Bad Tölz (DE)**

(74) Vertreter: **Winter, Josef et al**
**Tognum AG**
**VL-P Schutzrechte**
**Maybachplatz 1**
**88045 Friedrichshafen (DE)**

(56) Entgegenhaltungen:
JP-A- 01 183 073    JP-A- 04 004 570
JP-A- 04 324 253    US-A- 4 522 894
US-A- 5 419 978

EP 1 393 395 B1

**Beschreibung**

Die Erfindung betrifft ein Verfahren zur Bereitstellung von Standbygas für eine Brennstoffzellenanordnung.

Beim Betrieb von Brennstoffzellenanordnungen, insbesondere von solchen, bei denen Schmelzkarbonatbrennstoffzellen zum Einsatz kommen, besteht eine Anforderung darin, dass während Anlagenstörungs- und Wartungszeiten die Betriebstemperatur gehalten werden soll. Bei Schmelzkarbonatbrennstoffzellen heißt das; dass eine Betriebstemperatur von ungefähr 650 °C zu halten ist. Zur Verhinderung von Oxidationen auf der Anodenseite, das heißt an den typischerweise aus Nickel hergestellten Anoden, ist es dabei erforderlich, den Anoden ein Spülgas zuzuführen, welches typischerweise aus Stickstoff, Wasserstoff und/oder Kohlendioxid besteht. Herkömmlich werden zu diesem Zweck eigens Spülgase bzw. Standbygase an der Brennstoffzellenanordnung bevorratet. Dies führt zu einem erhöhten Investitions- und Flächenbedarf und begrenzt die zulässige Stillstandzeit auf die Reichweite des Spülgasvorrats.

Aus dem Japanischen Patent Abstract 04004570 A ist eine Brennstoffzellenanordnung bekannt, bei der ein hauptsächlich aus Wasserstoff bestehendes Standbygas zur Überwindung von Stillstandszeiten der Brennstoffzellenanordnung unter Beibehaltung der Brennstoffzellentemperatur verwendet wird. Weiterhin ist aus dem Japanischen Patent Abstract 04324253 A eine Brennstoffzellenanordnung bekannt, bei der ein Standbygas, das aus mit einem reduzierenden Gas gemischtem Stickstoff besteht, verwendet wird, um bei Stillstandszeiten der Brennstoffzellenanordnung eine Oxidation der Anoden der Brennstoffzellenanordnung zu verhindern.

Die US 4,522,894 offenbart eine Brennstoffzellenanordnung mit einem Reformer, dem eine Mischeinrichtung vorgeschaltet ist, in der einem zu reformierenden Gas Luft zugemischt wird. Mit der Luft wird ein Teil des Primärgases verbrannt, sodass für den Reformiervorgang eine ausreichende thermische Energie zur Verfügung steht. Ziel des zugrundeliegenden Verfahrens ist die Gewinnung eines wasserstoffreichen Gases.

Die Aufgabe der Erfindung ist es, ein Verfahren zur Bereitstellung von Standbygas für eine Brennstoffzellenanordnung anzugeben, bei welchem das Standbygas nicht eigens bevorratet werden muss.

Die Aufgabe wird durch das in Anspruch 1 angegebene Verfahren gelöst. Vorteilhafte Weiterbildungen des erfindungsgemäßen Verfahrens sind in den Ansprüchen 2 bis 6 angegeben.

Gemäß Anspruch 1 ist vorgesehen, dass ein brennbares Gas mit Luft oder einem anderen sauerstoffhaltigen Gas zu einem ersten Gemisch gemischt und durch eine Katalysatoreinrichtung geführt wird, wobei unter Umsetzung des Sauerstoffanteils des ersten Gasgemischs zu Kohlendioxid und Wasserdampf und unter Umsetzung von in dem Gasgemisch enthaltenen Bestandteilen an Wasserdampf und höheren Kohlenwasserstoffen zu Methan und Wasserstoff das Standbygas erhalten wird. Erfindungsgemäß ist vorgesehen, dass die Luft oder das sauerstoffhaltige Gas unterstöchiometrisch zugeführt wird, so dass in dem erhaltenen Standbygas ein kleiner Bestandteil an brennbarem Gas enthalten ist.

Ein wesentlicher Vorteil des erfindungsgemäßen Verfahrens ist es, dass auf den Einsatz von großvolumigen Vorratsbehältern zur Bereitstellung von Standbygasen verzichtet werden kann, was zu einer Verringerung der Wartungs- und Betriebskosten der Brennstoffzellenanordnung führt. Ein weiterer Vorteil ist es, dass die Dauer der zulässigen Stillstandszeiten nicht durch die Größe eines begrenzten Vorrates an Standbygas beschränkt ist.

Gemäß einer sehr vorteilhaften Ausführungsform der Erfindung ist es vorgesehen, dass das erste Gemisch bei einer vorgegebenen ersten Temperatur durch einen ersten Katalysator geführt wird, wobei unter Umsetzung des Sauerstoffanteils des ersten Gasgemischs zu Kohlendioxid und Wasserdampf ein zweites Gasgemisch erhalten wird, und dass das zweite Gasgemisch bei einer vorgegebenen zweiten Temperatur durch einen zweiten Katalysator geführt wird, wobei unter Umsetzung von in dem Gasgemisch enthaltenen Bestandteilen an Wasserdampf und höheren Kohlenwasserstoffen zu Methan und Wasserstoff das Standbygas erhalten wird, wobei die Umwandlung des zweiten Gasgemischs endotherm bei erhöhter Temperatur erfolgt.

Gemäß einer vorteilhaften Ausgestaltung der Erfindung ist es vorgesehen, dass als erster Katalysator zur Umsetzung des ersten Gasgemischs ein herkömmlicher Verbrennungskatalysator verwendet wird.

Vorteilhafterweise wird das Standbygas der Anodenseite der Brennstoffzellenanordnung zugeführt.

Weiterhin von Vorteil ist es, dass die Brennstoffzellenanordnung durch Zuführung des Standbygases im Stillstandsbetrieb auf Betriebstemperatur gehalten wird.

Gemäß einer vorteilhaften Ausgestaltung der Erfindung ist es vorgesehen, dass als brennbares Gas, aus dem das Standbygas erzeugt wird, Flüssiggas verwendet wird.

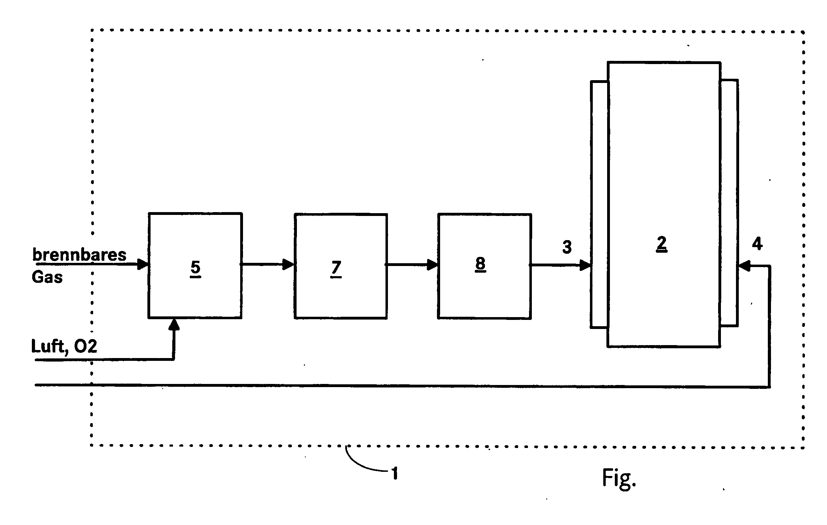

Im Folgenden wird ein verfahrensmäßiges Ausführungsbeispiel der Erfindung anhand der Figur beschrieben.

Die Figur zeigt ein Blockdiagramm einer Brennstoffzellenanordnung bei der das erfindungsgemäße Verfahren, zur Bereitstellung von Standbygas für eine Brennstoffzellenanordnung durchgeführt werden kann.

In der Figur bedeutet das Bezugszeichen 1 eine Brennstoffzellenanordnung, insbesondere Schmelzkarbonatbrennstoffzellenanordnung, die eine oder mehrere Brennstoffzellen 2 umfasst. Die Brennstoffzellen 2 enthalten jeweils eine Anode und eine Kathode, die in der Figur nicht eigens dargestellt sind. Weiterhin umfasst die Brennstoffzellenanordnung 1 einen Brenngaseingang 3 zur Zuführung eines Brenngases zu den Anoden und einen Kathodeneingang 4 zur Zuführung eines Kathodengases zu den Kathoden der Brennstoffzellen 2. Eine Katalysatoreinrichtung 7, 8 ist zur katalytischen Aufbereitung des Brenngases vorgesehen. Die Katalysatoreinrichtung 7, 8 kann insbesondere auch zur katalytischen Aufbereitung des Brenngases aus einem Spitzenlastgas dienen.

Mittel 5 sind zur Mischung eines brennbaren Gases mit Luft oder einem anderen sauerstoffhaltigen Gas zu einem ersten Gemisch vorgesehen.

Bei dem dargestellten Ausführungsbeispiel enthält die Katalysatoreinrichtung 7, 8 einen ersten Katalysator 7, durch den das erste Gemisch bei einer vorgegebenen ersten Temperatur geführt wird. In dem ersten Katalysator 7 wird unter Umsetzung des Sauerstoffanteils des ersten Gasgemischs zu Kohlendioxid und Wasserdampf ein zweites Gasgemisch erhalten. Die Katalysatoreinrichtung 7, 8 enthält einen zweiten Katalysator 8, durch den das zweite Gasgemisch bei einer vorgegebenen zweiten Temperatur geführt wird. In dem zweiten Katalysator 8 wird unter Umsetzung von in dem Gasgemisch enthaltenen Bestandteilen an Wasserdampf und höheren Kohlenwasserstoffen zu Methan und Wasserstoff das Standbygas erhalten.

Die Umwandlung des zweiten Gasgemischs in dem zweiten Katalysator 8 erfolgt endotherm bei erhöhter Temperatur.

Die Luft oder das sauerstoffhaltige Gas wird unterstöchiometrisch zugeführt, so dass in dem erhaltenen Standbygas ein kleiner Bestandteil an brennbarem Gas enthalten ist.

Die katalytische Umwandlung des Brenngases erfolgt entsprechend der Reaktionsgleichung

$$12\ CH_4 + 20\ O_2 + 80\ N_2 = 80\ N_2 + 10\ CO_2 + 2\ CH_4 + 20\ H_2O .$$

Als erster Katalysator 7 zur Umsetzung des ersten Gasgemischs kann ein herkömmlicher Verbrennungskatalysator verwendet werden.

Das so erzeugte Standbygas wird der Anodenseite am Brenngaseingang 3 der Brennstoffzellenanordnung 1 zugeführt.

Die Brennstoffzellenanordnung 1 wird durch Zuführung des Standbygases im Stillstandsbetrieb auf Betriebstemperatur gehalten.

Als brennbares Gas, aus dem das Standbygas erzeugt wird, kann Flüssiggas verwendet werden.

**Patentansprüche**

1.  Verfahren zur Bereitstellung von Standbygas für eine Brennstoffzellenanordnung, insbesondere eine Schmelzkarbonatbrennstoffzellenanordnung, **dadurch gekennzeichnet, dass** ein brennbares Gas mit Luft oder einem anderen sauerstoffhaltigen Gas zu einem ersten Gemisch gemischt und durch eine Katalysatoreinrichtung geführt wird, wobei unter Umsetzung des Sauerstoffanteils des ersten Gasgemischs zu Kohlendioxid und Wasserdampf und unter Umsetzung von in dem Gasgemisch enthaltenen Bestandteilen an Wasserdampf und höheren Kohlenwasserstoffen zu Methan und Wasserstoff das Standbygas erhalten wird, und wobei die Luft oder das sauerstoffhaltige Gas unterstöchiometrisch zugeführt wird, so, dass in dem erhaltenen Standbygas ein kleiner Bestandteil an brennbarem Gas enthalten ist.

2.  Verfahren nach Anspruch 1, **dadurch gekennzeichnet, dass** das erste Gemisch bei einer vorgegebenen ersten Temperatur durch einen ersten Katalysator geführt wird, wobei unter Umsetzung des Sauerstoffanteils des ersten Gasgemischs zu Kohlendioxid und Wasserdampf ein zweites Gasgemisch erhalten wird, und dass das zweite Gasgemisch bei einer vorgegebenen zweiten Temperatur durch einen zweiten Katalysator geführt wird, wobei unter Umsetzung von in dem Gasgemisch enthaltenen Bestandteilen an Wasserdampf und höheren Kohlenwasserstoffen zu Methan und Wasserstoff das Standbygas erhalten wird, wobei die Umwandlung des zweiten Gasgemischs endotherm bei erhöhter Temperatur erfolgt.

3.  Verfahren nach Anspruch 2, **dadurch gekennzeichnet, dass** als erster Katalysator zur Umsetzung des ersten Gasgemischs ein herkömmlicher Verbrennungskatalysator verwendet wird.

4.  Verfahren nach einem der Ansprüche 1 bis 3, **dadurch gekennzeichnet, dass** das Standbygas der Anodenseite der Brennstoffzellenanordnung zugeführt wird.

5.  Verfahren nach Anspruch 4, **dadurch gekennzeichnet, dass** die Brennstoffzellenanordnung durch Zuführung des Standbygases im Stillstandsbetrieb auf Betriebstemperatur gehalten wird.

6.  Verfahren nach einem der Ansprüche 1 bis 5, **dadurch gekennzeichnet, dass** als brennbares Gas, aus dem das Standbygas erzeugt wird, Flüssiggas verwendet wird.

**Claims**

1.  Method for providing standby gas for a fuel cell arrangement, in particular a molten carbonate fuel cell arrangement, **characterized in that** a combustible gas is mixed with air or some other gas containing oxygen to form a first mixture and is passed through a catalytic converter device, wherein the standby gas is obtained by conversion of the oxygen component of the first gas mixture to carbon dioxide and water vapour, and by conversion of components of water vapour and higher hydrocarbons contained in the gas mixture to methane and hydrogen, and wherein the air or the gas containing oxygen is supplied sub-stoichiometrically, such that the standby gas which is obtained contains a small proportion of combustible gas.

2.  Method according to Claim 1, **characterized in that** the first mixture is passed through a first catalytic converter at a predetermined first temperature, wherein a second gas mixture is obtained by conversion of the oxygen component of the first gas mixture to carbon dioxide and water vapour, and **in that** the second gas mixture is passed through a second catalytic converter at a predetermined second temperature, wherein the standby gas is obtained by conversion of components of water vapour and higher hydrocarbons contained in the gas mixture to methane and hydrogen, wherein the second gas mixture is converted endothermically at an increased temperature.

3.  Method according to Claim 2, **characterized in that** a conventional combustion catalytic converter is used as the first catalytic converter for conversion of the first gas mixture.

4.  Method according to one of Claims 1 to 3, **characterized in that** the standby gas is supplied to the anode side of the fuel cell arrangement.

5.  Method according to Claim 4, **characterized in that** the fuel cell arrangement is kept at the operating temperature by supplying the standby gas when not in use.

6.  Method according to one of Claims 1 to 5, **characterized in that** liquid gas is used as the combustible gas from which the standby gas is produced.

**Revendications**

1.  Procédé de préparation d'un gaz d'attente pour un système de cellules à combustible, en particulier un système de cellules à combustible à carbonate fondu,
    **caractérisé en ce que**
    un gaz combustible est mélangé avec de l'air ou avec un autre gaz contenant de l'oxygène pour former un premier mélange qui est passé à travers un dispositif de catalyse,
    **en ce que** le gaz d'attente est obtenu en convertissant en dioxyde de carbone et en vapeur d'eau l'oxygène que contient le premier mélange de gaz et en convertissant en méthane et en hydrogène la teneur en vapeur d'eau et la teneur en hydrocarbures supérieurs que contient le mélange de gaz et
    **en ce que** l'air ou le gaz contenant de l'oxygène sont amenés en proportion infrastoechiométrique de telle sorte que le gaz d'attente ainsi obtenu contienne une petite teneur en gaz combustible.

2.  Procédé selon la revendication 1, **caractérisé en ce que** le premier mélange traverse un premier catalyseur à une première température prédéterminée, **en ce qu'**un deuxième mélange de gaz est obtenu en convertissant en dioxyde de carbone et en vapeur d'eau l'oxygène que contient le premier mélange de gaz, **en ce que** le deuxième mélange de gaz est passé à travers un deuxième catalyseur à une deuxième température prédéterminée, **en ce que** le gaz d'attente est obtenu en convertissant en méthane et en hydrogène la teneur en vapeur d'eau et la teneur en hydrocarbures supérieurs que contient le mélange de gaz et **en ce que** la conversion du deuxième mélange de gaz s'effectue en conditions endothermiques à haute température.

3.  Procédé selon la revendication 2, **caractérisé en ce qu'**il utilise un catalyseur de combustion habituel comme premier catalyseur de conversion du premier mélange de gaz.

**4.** Procédé selon l'une des revendications 1 à 3, **caractérisé en ce que** le gaz d'attente est apporté au côté anodique du système de cellules à combustible.

**5.** Procédé selon la revendication 4, **caractérisé en ce que** lorsque le système de cellules à combustible est à l'arrêt, il est maintenu à température de fonctionnement par amenée du gaz d'attente.

**6.** Procédé selon l'une des revendications 1 à 5, **caractérisé en ce qu'**il utilise comme gaz combustible un gaz liquéfié formé à partir du gaz d'attente.

brennbares Gas

Luft, O2

**5** → **7** → **8** → 3 → **2** ← 4

1

Fig.

EP 1 393 395 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 04004570 A
- JP 04324253 A
- US 4522894 A